# EUROPEAN PATENT APPLICATION

(11) **EP 3 295 789 A1**
(43) Date of publication of application: **21.03.2018**
(21) Application number: 17001554.9
(22) Date of filing: 18.09.2017
(51) Int. Cl.: A01K 15/02, A01K 5/02

(54) **METHOD FOR ENRICHING THE ENVIRONMENT IN A SLATTED FLOOR PIG HOUSING SYSTEM**

(30) Priority: 19.09.2016 PL 41875516
(71) Applicant: Schwarz, Tomasz, 31-365 Krakow (PL); Nowicki, Jacek, 30-364 Krakow (PL); Turek, Artur, 32-020 Wieliczka (PL); Feliks, Jacek, 32-067 Tenczynek (PL)
(72) Inventor: Schwarz, Tomasz, 31-365 Krakow (PL); Nowicki, Jacek, 30-364 Krakow (PL); Turek, Artur, 32-020 Wieliczka (PL); Feliks, Jacek, 32-067 Tenczynek (PL)
(74) Representative: Gizinska-Schohe, Malgorzata

(57) **Abstract**

A method for enriching the environment in a non-straw bedding (slatted floor) pig housing system, characterized by using a toy (1-3) in the form of a hollow, geometric shape filled with a semi-fluid, loose or granulated edible substance, with a consistency allowing for gradual escape (flowing or pouring out) from the center through openings (4) in the lower part of the toy. In the upper part inside the toy a container (7) with apertures extending outside the toy is placed.

The toy in the lower part is provided with additional elements (5, 9) in the form of bundles of fibers, natural-fiber twines, plastic-coated chains, or longitudinal elements made of hard but plastic material.

## Description

The subject of the invention is a method for enriching the environment in a no-straw bedding (slatted floor) pig housing system.

Existing EU legislation concerning the livestock housing systems requires breeders and producers of pigs to ensure not only the proper conditions of the microclimate but also to enrich the environment with elements that provide incentives and opportunities for natural behavior and prevent the occurrence of behavioral pathologies, related body injures and suffering (Directive 2008/120/EC). Pigs should be kept in group systems whenever possible because they are gregarious animals (Directive 2008/120/EC). This allows for the development of appropriate social relationships while at the same time limiting isolation and frequent stress of isolation due to the construction of individual pens and stalls (Broom et al., 1995, Seguin et al., 2006; Elmore et al., 2011). On the other hand, housing pigs in the group is associated with an increased risk of behavioral, social pathologies such as aggressive behavior and cannibalism (Merlot et al., 2004; Paratt et al., 2006). According to EFSA research and analysis, the main cause of such behavior is boredom due to very poor housing environment and consequent frustration resulting from highly developed pig intelligence - comparable to the intellectual potential of non-human primates (Beattie et al., 1995; De Weerd et al., 2005; Scott et al., 2006; EFSA, 2011). For this reason, EU legislation on pig welfare is constantly evolving, with the aim of providing conditions as close to the optimum as possible to both: the comfort of life and, above all, mental and social comfort (Gavinelli, 2010). Laws and so-called good production practices, however, often stand in opposition to the organizational and economic aspects of production, causing breeders and producers resistance, severely limiting the profitability of production and often leading to bankruptcies.

The current rules point to several features of environmental enrichment that must be met in order to be able to recognize that these elements are sufficient taking into account needs of the animals and the existing law regulations. These features include:
1. Ability to eat
2. Ability to chew (with deformation but without swallowing)
3. Possibility of destruction
4. Possibility of rooting (Studnitz et al., 2007; Van de Weerd and Day, 2009).

The novelty of the enriching element is also of great importance because of the fact that the play with the same environmental enrichment becomes unattractive for pigs very quickly. Even minor changes increase interest and thus reduce the risk of pathological behavior, so this fifth element should be fulfilled. In the present situation, it seems that the only environmental enrichment for pigs meeting all these requirements is litter, especially straw or peat. Because of the efficiency of organization and production management and the economic viability of farms, European producers have been switching to slatted floor systems for many years. According to statistics, currently around 89% of the pig population in the EU is kept under slatted floor system conditions, which, according to the newly established good practice principles, does not provide the possibilities to optimize living conditions of animals taking into account proper environmental enrichment (Welfare Quality®, 2009). Analyzes carried out in Sweden show that the slatted floors can be covered with appropriately chopped straw chaff (Westin et al., 2013; Westin et al., 2014; Day et al., 2008). However, an attempt to directly implement the results of the researches carried out on a very small scale to a large scale of the whole EU, seems to be risky. The possible consequences of drainage system damage would generate enormous costs of repair, overhaul and downtime. On the other hand, it is impossible to return to the typical straw bedding system for pigs because of the farm reconstruction costs as well as the organization of production and the cost of ongoing operations, which, at the present very low unit production cost, must be minimized as effectively as possible. In this situation, it was an urgent need to develop such an element of environmental enrichment which, in conditions of slatted floor housing system, would allow for the fulfillment of animal welfare law requirements.

Existing solutions mostly allow for meeting one or two of the required four traits which ideal environmental enrichment should represent. Naturally, it is possible to use several environmental enrichment elements that together will meet all the assumed requirements. However, none of the existing solutions used in slatted floor systems does not give animals the ability to express the natural and required by the law pig behavior which is rooting. The use of environmental enrichment substances that are edible is also very limited.

At present, the most commonly used elements of environmental enrichment in slatted floor housing systems for pigs are chains, hanging over the floor. The main reason for their use are low cost and easy to install and at the same time high durability. The only feature of chains in the extent required by law is the ability to chew, which is not fully expressed, because chewing the chain does not lead to deform it. Not destructible objects such as chains and tires are not sufficient to meet the manipulation needs of pigs, they can be used as an additive for the materials which can be damaged and rooted in but they can not be used as substitutes of proper enrichment (EFSA, 2007).

The second most widely used are plastic components such as pipe pieces, bottles, plastic hoses, etc. They can be chewed, if the material used is soft enough and the piece itself is small enough to fit in the mouth. Usually they can also be destroyed, but it also depends largely on the size and hardness of the material. They are not edible and under no circumstances give the opportunity for rooting.

In the third place there are wooden elements, lying or hanging on chains. By using the right kind of wood they are edible and chewable (not as whole but as torn pieces). They are also possible to destroy, but this process usually lasts so long that it is unnoticed by pigs as a result of their action, so this feature of wooden blocks is questioned by experts of the European Commission. The wooden elements do not give rooting possibility, at all.

The chews, composed of many elements allow chewing and, depending on the material used, the final destruction. Typically, as rattles are used knots tangled with string ties, hung above the floor, sometimes filled with plastic tubes. They do not give a chance for rooting and they are completely inedible.

The next element, however, rarely used are paper cartons. Undoubtedly they can be chewed and destroyed. They can also be eaten, but it is associated with a serious health risk to pigs through numerous toxic admixtures resulting from use in the production of recycled materials such as newspapers (toxic ink). To some extent, they allow rooting if thrown to the floor, but they are destroyed so quickly that the ability to roll also very quickly disappears.

Wooden balls rolled on the ground only allow for a simplified expression of rooting behavior, but they are very quickly stained with faeces and cease to be attractive as a toy, thereby ceasing to be effective environment enrichment. Suspended balls do not, in principle, meet any of the required characteristics.

Salty lice are edible, but do not meet any of the other required features.

The essence of the invention is the use of a single device for enriching the pig environment under non-straw bedding conditions, which meets all the requirements developed by EFSA and approved by the European Commission to ensure animal welfare and prevent pathological behavior including cannibalism. The device consists of two main parts: 1. a toy that ensures continuous interest in pigs and allows for all desired activity; 2. the structure on which the toy is placed, supporting the functions of the toy itself.

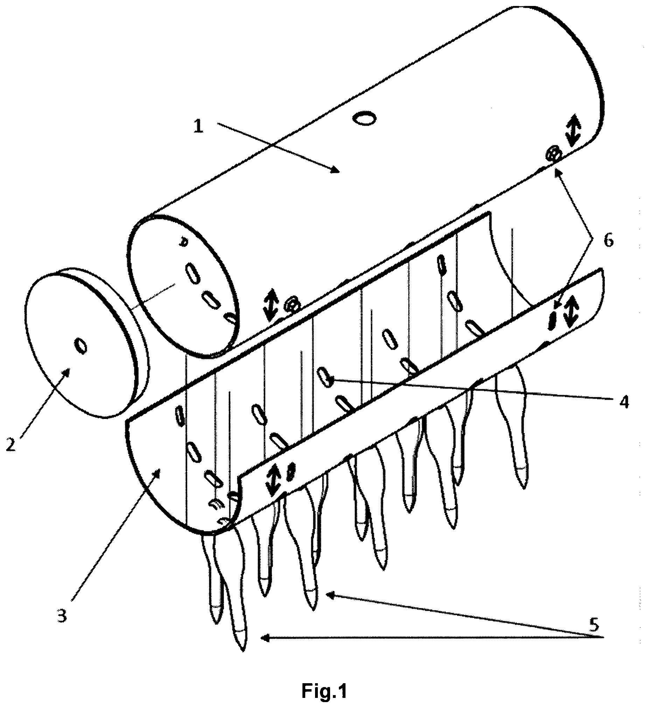

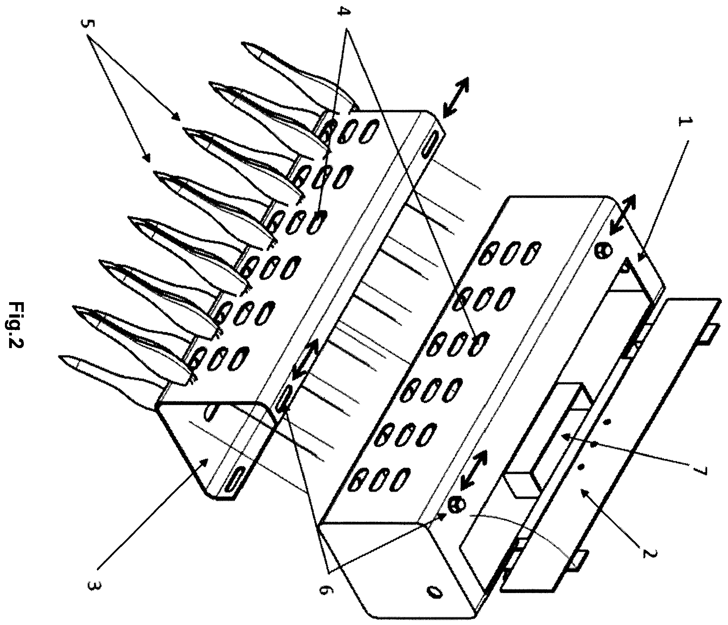

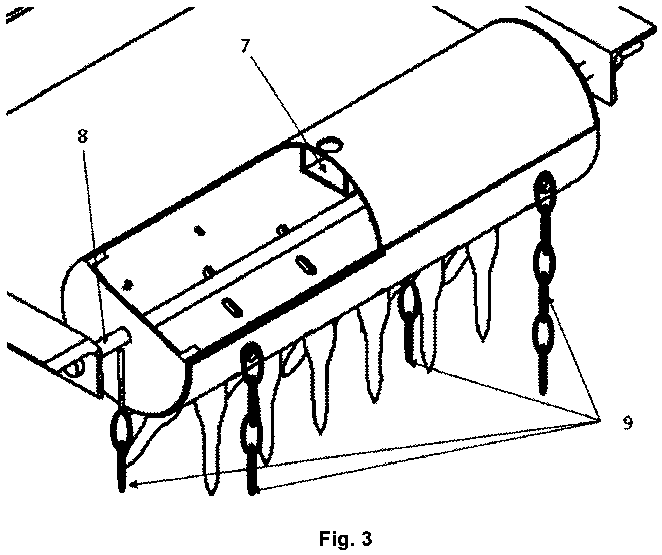

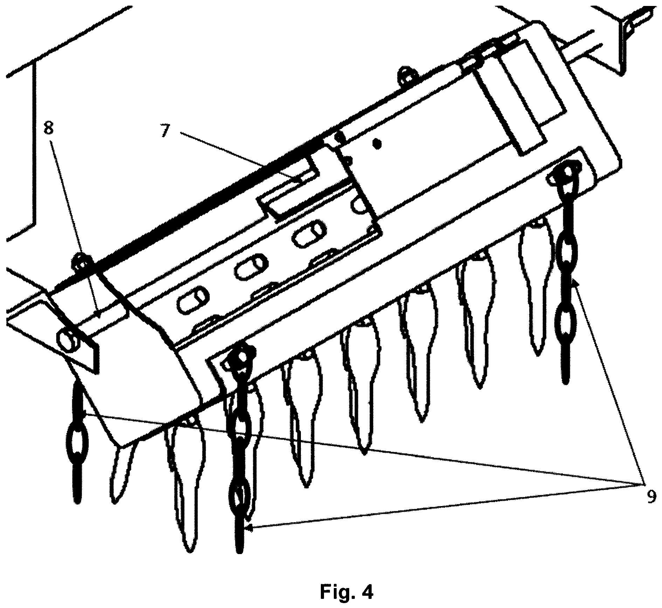

A toy in the form of a spatial figure, e.g. a cylinder (fig. 1) or a cuboid (fig. 2), etc., made of any material that allows it to be formed in the desired shape, and which ensures durability and safety of use, including microbiological safety of animals of size depending on the group of animals for which it is to be used, is suspended on the axis of rotation, allowing the animals to freely rotate it (Figures 3 and 4, item 8), by the movements of the mouth which are similar to the movements performed during the rooting behavior. The toy is empty inside and it is possible to open its interior space (Figures 1 and 2), which allows placing inside edible substances with a consistency allowing for gradual escape (flowing or pouring out) through holes in the lower part of the toy (Figures 1 and 2, point 4). This may be molasses, or commercially available molasses-based licking material or loose or granulated feed materials with a high content of sweet carbohydrates providing sweet substances, which are strongly preferred by pigs and providing an additional source of readily digestible and metabolically efficient energy. Mentioned energy is especially important in critical periods in the life of pigs, such as piglet weaning, or transfer of weaners to the fattening sector, which often results in temporary loss of appetite, weight loss and health problems. The position of the opening/closing element for access to the interior of the toy depends on its shape. It may be one of the side walls in the case of a cylinder (fig. 1 point 2) or the upper part in the case of a cuboid (fig 2, point 2).

The above construction elements provide two characteristics of the required functionalities of environmental enrichment, namely the edibility and the ability for rooting. The possibility of altering the edible substance also provides such a significant and required novelty value (Van de Weerd et al., 2003; Moinard et al., 2003).

The functionality of the toy is significantly enhanced by adding a number of additional elements to the basic element. They can be installed directly on the perforated bottom, but this solution would require reassembly of numerous individual items after their destruction or wear, or replacement of the entire toy, which would significantly increase the cost of ownership. An alternative solution is to install 4, 5 or more point (depending on the size of the toy) fixing system, which will enable installation of a separate panel covering the lower part of the object (Figures 1 and 2, point 3). The mounting system can be longitudinal holes whereby the panel can be installed by means of bolts with nuts fitted on the inside of the toy, and the position of the panel can be adjusted to some extent relative to the body of the object (Figures 1 and 2, point 1). adjusting the size of the through holes (Fig. 1, 2 point 6). Additional features that enhance the functionality of the toy are then installed on the panel (Figures 1 and 2), so that after using them, a simple and quick replacement of the panel is required, while the rest of the environmental enhancer may be used repeatedly. The used panel may be returned to the manufacturer for reproduction, which may reduce the purchase price of the new panel on a similar basis to bottled beverages. The panel has longitudinal holes that exactly match the holes in the lower part of the toy, so that the edible substance or liquid from the inside of the toy is provided. Because of the ability to adjust the position of the panel relative to the whole object, the size of these openings and thus the rate of flow or spillage of the contents can be adjusted. In the case of a cylinder, the long axis of the holes will be perpendicular to the axis of rotation (Fig. 1 point 4), so the size adjustment will be carried out by moving the panel perpendicular to the axle (Fig. 1 the arrows at the fastening system illustrate the movement of the panel relative to the body). In the case of a cuboid, such a movement of the panel is impossible due to the angles. In this case, the long axis of the holes will be parallel to the axis of rotation (Fig. 2 pt. 4) and the panel will also be moved parallel to this axis (Figure 2. The arrows at the fastening system illustrates the movement of the panel relative to the body). For this reason, the panel in the case of a cuboid should be shorter than the main toy itself (Figure 2).

The additional elements to improve the functionality of the toy consist primarily of the whole of the panel, or the lower part of the object, thick clumps of thin natural fibers, and various thickness of the twine, also from natural fibers (such as hemp, wool or sisal) (Fig. 2 point 5). They form the bottom of the element enriching the pig environment something like a beard, provoking pigs to play actively. It definitely improves the functionality of the toy in terms of rooting simulations, by imitating the most commonly used bedding material, like straw. In addition, because of the use of natural fibers, which additionally overlap with the flowing or spillable edible substance, the character of edibility increases and a completely new feature of destruction appears as different fiber weights will be gradually torn and peeled, as is the case in the lathe system. when pigs play with straw.

The additional elements are plastic-coated chains mounted on the panel attachment points (Figures 3 and 4, point 9). Four or five such chains improve the durability of the panel by limiting the destruction of more sensitive components (catching the snout of the twine, or clumps of fibers along with the chain reduces the amount of ragged fibers). These elements resemble commonly used toys, but their functionality is greater. The chain is durable, almost indestructible, and its plastic coating can be bitten and deformed, remaining a permanent and non-inedible part of the toy. Instead of the coated chains, longitudinal durable, hard but deformable elements may be used, whose functionality will be similar. In addition to improving durability, these elements provide the last required by law feature of the device: the possibility of chewing with deformation without swallowing.

The last significant element of the toy is a small reservoir with one or several holes in the upper part of the toy, which passes through the upper part of the toy (Fig. 2, 3 and 4 point 7). This container is filled with food flavors, making it an additional element that attracts pigs, which are animals with extremely well-developed sense of smell. Each toy movement causes odor spread. Frequent change of aroma (on the market they are available in at least a dozen or so), definitely improves the long-term attractiveness of the toy by introducing a second, much more powerful element of novelty.

The described toy meets all the requirements for enrichment of the swine housing environment defined in the Community legislation as "A Code of Good Agricultural Practices":
1. It has edible elements and additionally with the taste which is most preferred by the pigs.
2. It has durable elements, which are chewable with possibility of deformation.
3. It has elements that are destructible, but easy to reproduce and restore the toy with full functionality.
4. It has elements and functionalities that enable the pigs to perform a rooting behavior reflex.
5. Enables maintaining the long-term attractiveness thanks to two fast consumable and replaceable items with similar functionality (edible material and flavor).

According to the best knowledge of the Authors, it is the only device with such a wide range of capabilities and functionality, what makes it unique and innovative.

The second important element of the device is the support mounting construction that keeps the toy in place in proper position and allows it to rotate during play. The additional purpose of this structure is to enrich and enhance the functionality of the toy. Depending on its size and type of pen to be installed, several possible solutions for the support mounting construction were developed:
1. One-arm construction for mounting a small toy on a building wall, openwork partition of a pen, or side wall of an automatic feeder.
2. Two or more arm construction for mounting a large toy on a building wall, openwork partition of a pen, or side wall of an automatic feeder.
3. Construction for mounting device in a slatted floor.

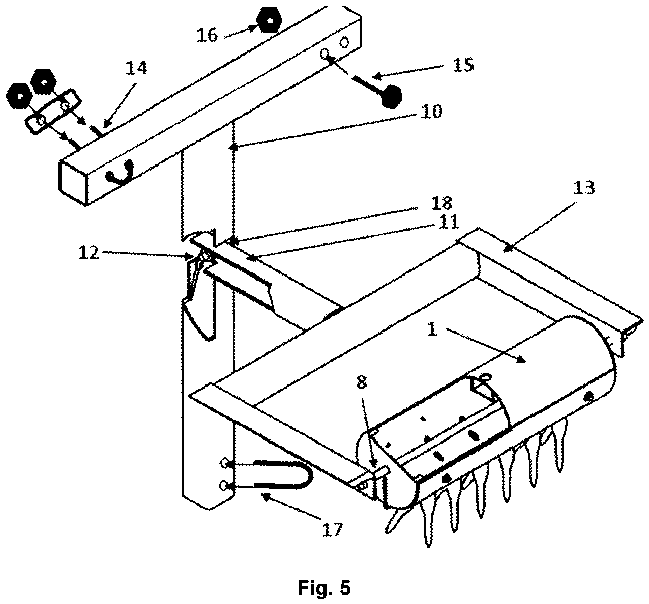

**Construction No 1** consists of a vertical column (fig. 5, point 10) of a square or rectangular steel closed profile connected "overlap" in a T-pattern or a Latin cross with a horizontal arm of steel closed profile or c-profile (fig. 5). Even holes are drilled in the horizontal arm on both sides of the vertical column, in which anchor bolts can be fixed to mount construction in the concrete wall (fig. 5). Alternatively, rope clamps can be used to mount construction on the openwork partition of a pen (fig. 5, point 14), or screws to attach it to a side wall of an automatic feeder (fig. 5, points 15 and 16). Similar even hole is drilled down of vertical column (fig. 5, point 17). This system enables installation of construction in every possible type of pen for swine housing, guaranteeing high level of mounting stability. In the central part of the vertical column, a rectangular opening (fig. 5, point 18) is cut, in which horizontal arm of steel closed profile is placed forward, horizontally with respect to the floor. The arm have an outer section corresponding to the internal section of the vertical column (fig. 5, point. 11). The tip of the arm entering the column aperture is cut at an angle from above, which, while retaining the clearance through the larger cross section of the hole in the column above the arm, allows its swing upward movement. The arm is mounted in a column on the axis passing through the holes in the side walls of the column and the corresponding holes in the side walls of the arm. Relaxation of the arm movement enables a compression spring installed on the axis connecting the arm to the column such that one spring arm enters the column downward, and the other spring arm enters the forward arm (fig. 5, point 12). The possibility of a swing motion makes the play more interesting by supplementing the rotational movement of the toy on the axis, what enables better realized rooting behavior. On the front end of the arm, long axis across the arm, a rectangular, open front frame of the angle bracket is installed (fig. 5, point 13). At the end of the short arms of the frame, the holes are drilled, in which the toy's rotation axis is inserted and secured on both sides by means of nuts on the toothed gaskets to prevent the device from tipping over when manipulated by the animals (fig. 5, point 8). On the axis of rotation the toy described above is installed. The complete device (toy and mounting construction), after being installed at the appropriate height on the building wall, openwork partition of a pen or side wall of an automatic feeder, is ready to fulfill its role, that is, to enrich swine housing environment and prevent the occurrence of pathological behavior including cannibalism.

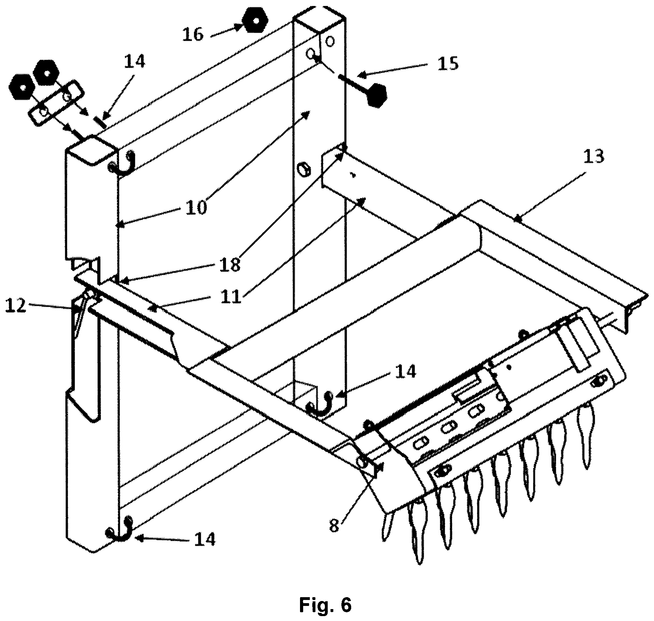

**Construction No 2** is the development of the construction no. 1 by adding additional vertical columns (fig. 6, point 10) connected by crossbars to the frame structure (fig. 6). This allows multi-point (more than 3) mounting of device on the building wall, openwork partition of a pen or side wall of an automatic feeder, giving a more stable backrest to the toy. Each column has its own swing arm (fig. 6, point 11), all of which are connected to one frame from the angle bracket (fig. 6, point 13) for attaching the rotary axis of the toy (fig. 6, point 8). Thanks to this, the construction is much stronger and more stable, allowing the installation of larger toys for larger animals or for larger groups of smaller animals.

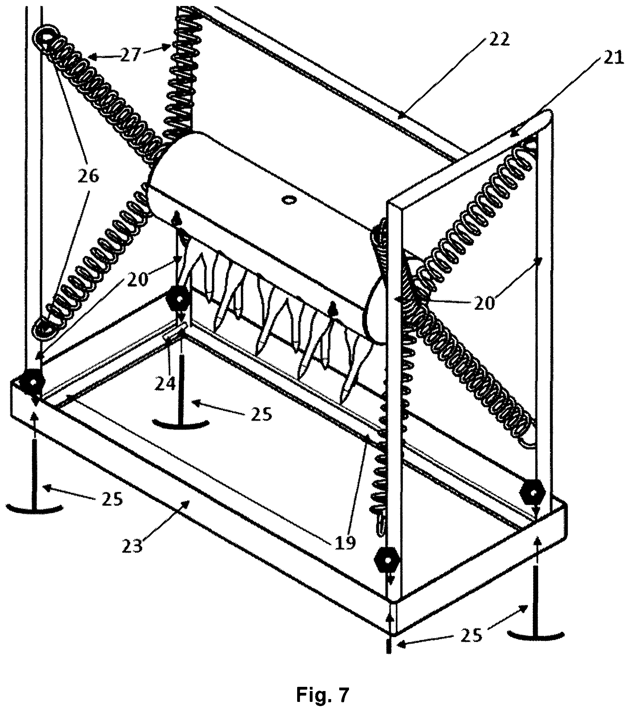

**Construction No 3** is a different concept that assumes the installation of device on the slatted floor (fig. 7). Its advantage over the No. 1 and No. 2 constructions is the ability to mount at a greater distance from walls and partitions, giving animals access to the toy on two sides and thus twice the space. The construction consists of an angle bracket rectangular frame (fig. 7, point 19), to which shorter parts vertical brackets are fixed (fig.7, point 20). Vertical brackets over the short sides of frame are connected by a horizontal brackets at the top. and upper horizontal brackets are connected by long horizontal bracket over long side of construction (fig.7, point 21). To give the structure rigidity, upper horizontal brackets are connected by long horizontal bracket over long side of construction fig.7, point 22). The size of the frame and bracket depends on the size of the toy, hence the age and size of the pigs, and/or the size of the group. The frame is installed inside a shallow tray (fig. 7, point 23) which purpose is to collect the edible substance from the inside of the toy if it is not licked off by the pigs for the time.

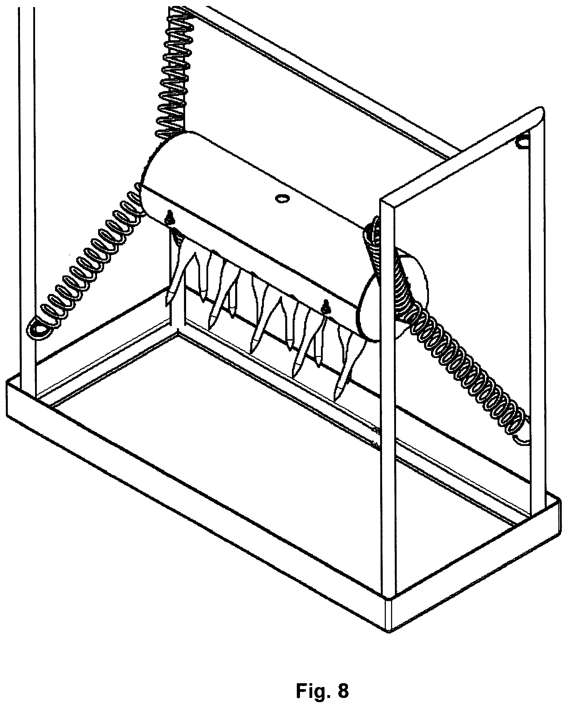

At the corners of the frame holes for anchor bolts are drilled (fig. 7, points 24 and 25). The screws pass through the slot of the slatted floor and through the hole in the frame, and then by screwing the nuts enable a durable and stable installation of construction in the floor. Hooks are mounted at the vertical brackets, and the number of hooks depends on the size of the toy (2 to 4 per bracket) (fig. 7, point 26). Tension springs are attached to the hooks (fig. 7, point 27). For small toys, two springs are provided on each side, one from above and one from below to form one sloping line, with the springs on both sides of the support construction being crossed (fig. 8). The springs are assembled in such a way that they are slightly stretched (tensioned) but still capable of being further stretched. At the ends of the rotary axis of the toy, the hoops are attached to which the other ends of the springs are connected. In this way the toy is suspended on the construction in a space allowing movement in three dimensions. This is an additionally attractive feature of the imitation movement like in rooting behavior, similar to the swinging motion in structures 1 and 2, but to a greater extent, as movement can be triggered both up and down and sides at different angles. For larger size of toys, 3 (Y-shaped or reverse Y-shaped) or 4 (cross-shaped or X-shaped) springs are used on each side, which increases the number of points of connection the toy, thus providing a more stable construction, still with the possibility of three-dimensional toy movement (fig. 7).

## Claims

1. A method for enriching the environment in a non-straw bedding (slatted floor) pig housing system, **characterized by** using a toy is in the form of a hollow, three-dimensional geometric shape filled with a semi-liquid, loose or granular edible substance, with a consistency allowing for gradual escape (flowing or pouring out) from the center through openings in the lower part of the toy.

2. The method according to claim 1, **characterized in that** in the upper part inside the toy a container with apertures extending outside the toy is placed.

3. The method according to claim 2, **characterized in that** the toy in the lower part is provided with additional elements in the form of bundles of fibers, natural-fiber twines, plastic-coated chains, or longitudinal elements made of hard but plastic material.

4. The method according to claim 3, **characterized in that** a wall mounting construction is provided with a pendulum-shaped, spring-loaded extension arm or arms for allowing gentle movement of the toy up and down with its automatic return to the starting position.

5. The method according to claim 4, **characterized in that** a floor mounting construction is provided with means for the multi-point suspension of the toy in the three-dimensional space by applying two to four tension springs at each end of the toy axis of rotation, for enabling gentle movement of the toy in any direction with its automatic return to the starting position.
